# EUROPEAN PATENT APPLICATION

(11) **EP 2 930 816 A1**
(43) Date of publication of application: **14.10.2015**
(21) Application number: 13860556.3
(22) Date of filing: 24.05.2013
(51) Int. Cl.: H02J 7/00

(54) **PORTABLE TERMINAL CHARGING APPARATUS**

(30) Priority: 06.12.2012 KR 20120140948; 11.04.2013 KR 20130039891
(71) Applicant: Jeong, Deok Hyeon, Seoul 110-012 (KR)
(72) Inventor: KIM, Na Young, Seoul 110-012 (KR)
(74) Representative: Sanger, Phillip Simon
(86) International application number: PCT/KR2013/004566
(87) International publication number: WO 2014/088168

(57) **Abstract**

The present invention relates to a portable terminal charging apparatus, comprising: at least one charger having a display unit for displaying charging status; and an adaptor for accommodating two or more chargers stacked in a layer, wherein the adaptor supplies charging power to the charger in a parallel manner. The charger is separated from the adaptor and connected to the portable terminal so as to supply the power charged through the adaptor to the portable terminal.

## Description

### [Technical Field]

The present disclosure relates to a charging apparatus and method for a portable device, and more particularly, to a portable device charging apparatus which may allow a number of people to conveniently charge a portable device at his/her position in a public place such as a cafe, a department store, a karaoke bar, a movie theater, and a bowling alley.

### [Background Art]

Portable electronic products such as MP3 players, smart phones, laptops and tablet PCs have become the necessities of life of modem people, which are widely utilized not only for a communication function, but also for overall everyday life such as entertainment, education, and business.

The portable electronic product (hereinafter, referred to as "portable device") includes a main body, and a battery which is coupled to the main body to supply electric power required for operating the main body. Typically, the portable device is operated in a power saving mode to save a battery life when a user does not manipulate the portable device. However, in the case of the portable device such as a smart phone, the battery is rapidly discharged due to automatic location identification functions using a GPS, and push functions of various types of applications even though the user does not frequently manipulate the portable device, that is, even though the user does not use the portable device. Therefore, the user is inconvenienced because the user often needs to charge the battery or needs to carry a separate auxiliary battery.

In order to prepare for the battery discharge, the user of the portable device charges the battery using a battery charging apparatus that uses a domestic power source, and then uses the portable device. In addition, the some users sometimes carry one or two spare batteries, which are charged separately from the portable device provided with the battery, and when the battery mounted in the portable device is fully discharged, the user replaces the discharged battery with the spare battery, and uses the portable device.

However, in a situation in which a degree of dependency on the portable device such as a smart phone is high and the portable device is very frequently used these days, there is a limit in using the spare/auxiliary battery, and it is very difficult to often charge the portable device. Moreover, the user may be placed in a difficult situation in which the user cannot use the portable device due to unexpected battery discharge, and the user cannot get in touch with other people urgently.

In order to cope with the situation, a convenience store and the like with high accessibility provides a quick charging service for the battery of the portable device. However, this service requires separate costs for user. And it may hard on the smart phone because the smart phone is quickly charged with raised voltage. Furthermore, it is difficult to fully charge the portable device within a limited time, that is usually charged only about 40 to 50%, and the user needs to leave the portable device in a shop for a predetermined time required to charge the portable device. Thus, it is impossible to alleviate inconveniences experienced by users in that the user cannot receive an important phone call during the predetermined time and the concern of customers about exposure and illegal use of various types of sensitive personal information such as an authorized certificate stored in the smart phone.

In order to solve the above problem, an auxiliary power supply apparatus for a portable device in the related art has been commercially available. However, because the auxiliary power supply apparatus for a portable device is charged only by a discrete charger, the auxiliary power supply apparatus always can be charged only at a location where an electrical outlet is present. When the auxiliary power supply apparatus for a portable device is discharged like the portable device battery, the auxiliary power supply apparatus is difficult to be charged outdoors, and as a result, there is a problem in that the original object of the auxiliary power supply apparatus cannot be achieved.

### [Disclosure]

### [Technical Problem]

The present disclosure has been made in an effort to solve the above problem, and an object of the present disclosure is to provide a portable device charging apparatus which may more conveniently charge a portable device in a public place such as a cafe, an amusement park, a restaurant, a beauty parlor, a public office, and an office.

In addition, another object of the present disclosure is to provide a portable device charging apparatus which may display contents such as advertisements so that users may be naturally exposed to the advertisements and the like while a portable device is being charged.

### [Technical Solution]

According to an exemplary embodiment of the present disclosure to achieve the above objects, a charging apparatus according to the present disclosure comprising: at least one charger configured to have a display unit that displays a charging state; and an adapter configured to mount and accommodate at least two or more chargers that are stacked on the adapter, and supply electric power for charging to the chargers in parallel, wherein the charger is separated from the adapter and connected to a portable device so as to supply electric power charged through the adapter to the portable device.

In addition, the charger may comprise: a main body configured to include a battery cell; upper electrodes configured to be formed at an upper side of the main body and include a positive electrode and a negative electrode; and lower electrodes configured to be formed at a lower side of the main body and include a positive electrode and a negative electrode corresponding to the upper electrodes, wherein the upper electrodes and the lower electrodes are formed at positions that are symmetrical to each other, and the upper electrodes are inserted into the lower electrodes, such that two adjacent chargers are electrically connected to each other.

In addition, the charger may further comprise: a protrusion configured to be formed at an upper end of the main body; and a groove configured to be symmetrical to the protrusion and formed at a lower end of the main body.

In addition, the display unit includes a first display mode in which a charger is being charged, a second display mode in which a charging error of the charger is displayed, a third display mode in which the charger is fully charged, and a fourth display mode in which discharging of the charger is displayed.

According to an exemplary embodiment of the present disclosure to achieve the above objects, a charger according to the present disclosure, which is electrically connected with an adapter to be supplied with electric power, and connected with a portable device to supply electric power supplied through the adapter to the portable device, the charger comprising: an input terminal to which electric power is input from the adapter; a battery configured to be charged with the electric power that is input from the input terminal; a control unit configured to control a charging state of the battery; a display unit configured to display the charging state of the battery; an output terminal through which charging voltage of the battery is supplied to the portable device; and a connecting unit configured to allow a plurality of chargers to be stacked and connected to each other and allow the plurality of chargers to be electrically connected in parallel.

In addition, the connecting unit may comprise: upper electrodes configured to be formed on an upper surface of the charger and include a positive electrode and a negative electrode; and lower electrodes configured to be formed on a lower surface of the charger and include a positive electrode and a negative electrode corresponding to the upper electrodes, wherein the upper electrodes and the lower electrodes are formed at positions that are symmetrical to each other, and the upper electrodes are inserted into the lower electrodes, such that two adjacent chargers are electrically connected to each other.

In addition, the display unit may include a first display mode in which a charger is being charged, a second display mode in which a charging error of the charger is displayed, a third display mode in which the charger is fully charged, and a fourth display mode in which discharging of the charger is displayed.

In order to achieve the above objects, a portable device charging apparatus according to another exemplary embodiment of the present disclosure comprising: at least one charger configured to have an output terminal that is connected with a display and a portable device; and an adapter configured to mount and accommodate at least two or more chargers that are stacked on the adapter, and supply electric power for charging to the chargers in parallel, wherein the charger is operated in a charging mode in which the charger is connected with the adapter and supplied with electric power, and a discharging mode in which the charger is separated from the adapter and connected with the portable device so as to supply electric power charged through the adapter to the portable device, and in the discharging mode, predetermined contents are displayed through the display.

In addition, the charger may comprise: a main body configured to include a battery cell; upper electrodes configured to be formed at an upper side of the main body and include a positive electrode and a negative electrode; and lower electrodes configured to be formed at a lower side of the main body and include a positive electrode and a negative electrode corresponding to the upper electrodes, wherein the upper electrodes and the lower electrodes are formed at positions that are symmetrical to each other, and the upper electrodes are inserted into the lower electrodes, such that two adjacent chargers are electrically connected to each other.

In addition, the charger may further comprise: a protrusion configured to be formed at an upper end of the main body; and a groove configured to be symmetrical to the protrusion and formed at a lower end of the main body.

In addition, the charger may further further comprise: a memory in which predetermined contents are recorded and stored; and a sensor configured to sense a flow of an electric current that is output through the output terminal, wherein when a flow of an electric current is sensed by the sensor, the contents stored in the memory are displayed through the display.

In order to achieve the above objects, a charger according to another exemplary embodiment of the present disclosure, which is electrically connected with an adapter to be supplied with electric power, and connected with a portable device to supply electric power supplied from the adapter to the portable device, the charger comprising: an input terminal to which electric power is input from the adapter; a battery which is charged with the electric power that is input from the input terminal; a control unit configured to control a charging state of the battery; a display unit configured to display the charging state of the battery; an output terminal through which charging voltage of the battery is supplied to the portable device; a memory in which predetermined contents are recorded and stored; a display configured to display the predetermined contents; and a sensor configured to sense a flow of an electric current that is output through the output terminal, wherein when a flow of an electric current is sensed by the sensor, the contents stored in the memory are displayed through the display.

The charger may comprise: upper electrodes configured to be formed on an upper surface of the charger and include a positive electrode and a negative electrode; and lower electrodes configured to be formed on a lower surface of the charger and include a positive electrode and a negative electrode corresponding to the upper electrodes, wherein the upper electrodes and the lower electrodes are formed at positions that are symmetrical to each other, and the upper electrodes are inserted into the lower electrodes, such that two adjacent chargers are electrically connected to each other.

The display unit may include a first display mode in which a charger is being charged, a second display mode in which a charging error of the charger is displayed, a third display mode in which the charger is fully charged, and a fourth display mode in which discharging of the charger is displayed.

### [Advantageous Effects]

According to the present disclosure as described above, the portable device charging apparatus is provided such that a customer may conveniently charge the portable device at his/her position in a public place such as a cafe, a department store, a karaoke bar, a movie theater, and a bowling alley.

In addition, according to the present disclosure, the portable device charging apparatus, which may display contents such as advertisements, is provided, such that users may be naturally exposed to the advertisements and the like while the portable device is charged.

Furthermore, according to the present disclosure, from the point of view of a shop, preference and satisfaction of a customer may rapidly rise, which leads to an increase in sales, and an image of a brand name may be imprinted.

### [Description of Drawings]

FIG. 1 is a perspective view illustrating a configuration a portable device charging apparatus according to an exemplary embodiment of the present disclosure.
FIG. 2 is a perspective view illustrating a configuration of a charger according to the exemplary embodiment of the present disclosure.
FIG. 3 is a perspective view illustrating a configuration of an adapter according to the exemplary embodiment of the present disclosure.
FIG. 4 is a view for explaining a connection relationship between the charger according to the exemplary embodiment of the present disclosure and a portable device.
FIG. 5 is a block diagram schematically illustrating a charging circuit of the charger according to the exemplary embodiment of the present disclosure.
FIG. 6 is a block diagram schematically illustrating a charging circuit of a charger according to another exemplary embodiment of the present disclosure.
FIG. 7 is a view for explaining an operation of connecting the charger according to another exemplary embodiment of the present disclosure with a portable device.

### [Best Mode]

Hereinafter, an exemplary embodiment of the present disclosure will be described in detail with reference to the accompanying drawings. In addition, in the description of the present disclosure, the specific descriptions of publicly known related configurations or functions thereof will be omitted when it is determined that the specific descriptions unnecessarily obscure the subject matter of the present disclosure.

The portable device of the present disclosure is a digital apparatus portable by a user and commonly refers to a portable device that performs a function of playing multimedia or a communication function. The portable device, which is described in the present disclosure, may be a laptop computer, a notebook computer, a personal digital assistant (PDA), an ultra-mobile personal computer (UMPC), a palmtop computer, a PMP, an MP3 player, a cellular phone, a smart phone, a tablet PC, and the like, but is not limited thereto, and includes all portable digital apparatuses.

In addition, a charger 100 of the present disclosure may serve as an auxiliary battery or a portable device charger for the portable device. The charger 100 may be used as a charger or an auxiliary battery that is charged with energy by being supplied with electric power from the outside through an adapter, and connected to the portable device to supply electric power to a battery in the portable device. Therefore, the charger 100 may be configured as a secondary battery that may be recharged and continued to be used even if the secondary battery is discharged once. As the secondary battery, a lithium-ion battery or a lithium-polymer battery may be used representatively.

The lithium-ion battery, in which an organic electrolyte is provided between a positive electrode (lithium cobalt oxide) and a negative electrode (carbon), is repeatedly charged and discharged, and widely used for a cellular phone, a notebook computer, a digital camera, and the like because the lithium-ion battery is advantageous in manufacturing a battery that is light in weight and has a high capacity. The lithium-polymer battery generates electricity by using an electrolyte that is provided between a positive electrode and a negative electrode and made of a polymeric material in the form of a solid or a gel instead of a liquid, and the lithium-polymer battery has high stability and excellent energy efficiency.

The charger 100, which is described in the present disclosure, has a comprehensive meaning including a storage battery, a capacitor, a charger, a battery charger, a battery, a dry battery, and the like that convert electrical energy into chemical energy, store the chemical energy, and regenerate electricity as necessary, and the charger 100 is not limited to a particular ingredient or material. Hereinafter, the term "charger" may be used together with the term "battery charger".

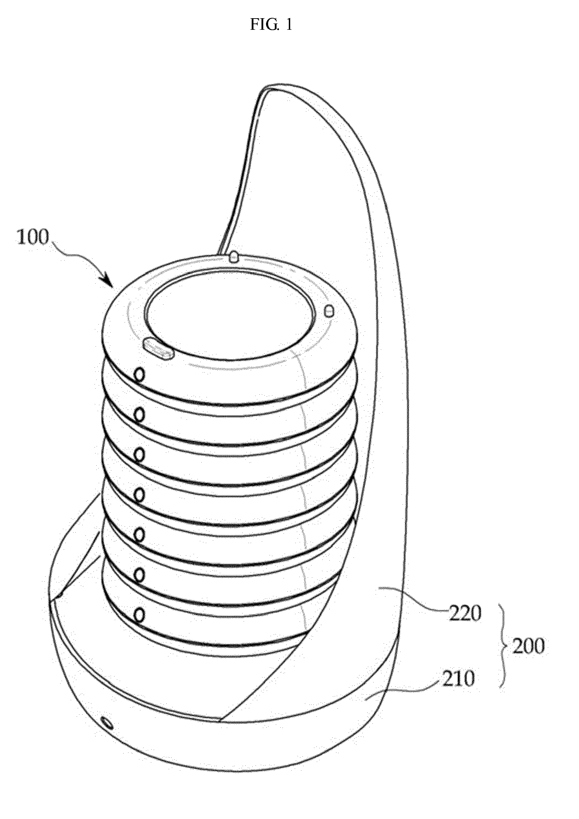

FIG. 1 is a perspective view illustrating a configuration of a charging apparatus according to an exemplary embodiment of the present disclosure.

Referring to FIG. 1, the charging apparatus according to the present disclosure includes a plurality of chargers 100, and an adapter 200.

The plurality of chargers 100 is charged through the adapter 200 for charging, and after the plurality of chargers 100 is separated from the adapter 200, the plurality of chargers 100 may be used as auxiliary batteries, respectively, or may independently charge at least one portable device, respectively. To this end, the plurality of chargers 100 is accommodated by being stacked on the adapter 200, and charged by voltage supplied from the adapter 200, as illustrated in the drawing.

The adapter 200 includes a main body 210, and a side wall 220. The main body 210 supports the plurality of chargers 100. The side wall 220 is formed to extend vertically from the main body 210 and surround lateral parts of the plurality of chargers 100, thereby stably accommodating the plurality of battery chargers 100. The side wall 220 may be formed while forming a smooth curved line as illustrated in the drawing, but the external appearance of the side wall 220 is not limited thereto. In addition, the side wall 220 may be implemented in any shape as long as the side wall 220 is configured to allow charging states of the chargers 100 to be seen from the outside.

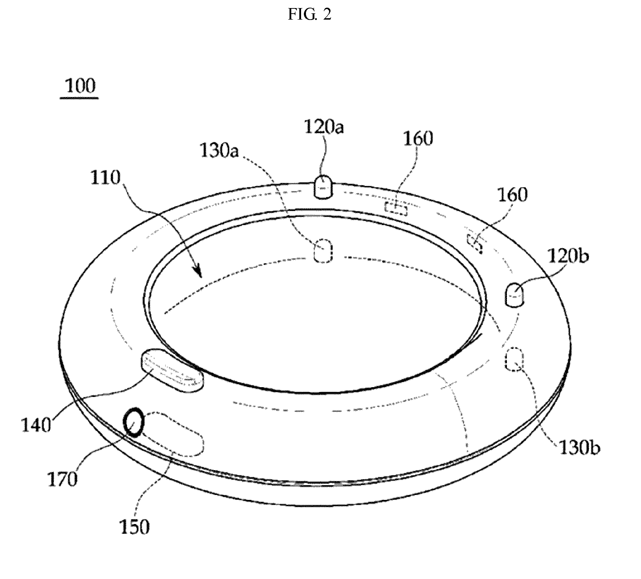

FIG. 2 is a perspective view illustrating a configuration of the charger according to the exemplary embodiment of the present disclosure.

Referring to FIG. 2, the charger 100 according to the present disclosure includes a main body 110, upper electrodes 120a and 120b, lower electrodes 130a and 130b, a protrusion 140, a groove 150, at least one output terminal 160, and a display unit 170.

The main body 110 may be formed in a circular shape or a polygonal shape, and may include therein a battery cell (not illustrated), and a circuit unit (not illustrated) for controlling the battery cell.

The upper electrodes 120a and 120b are formed at an upper side of the main body 110 and include a positive electrode 120a, and a negative electrode 120b. Here, the upper electrodes 120a and 120b symmetrically protrude so as to be inserted into and fastened to the lower electrodes 130a and 130b formed at a lower side of the main body.

The lower electrodes 130a and 130b are formed at a lower side of the main body 110, and include a positive electrode 130a and a negative electrode 130b, like the upper electrodes 120a and 120b. Here, the lower electrodes 130a and 130b are formed to be recessed.

Therefore, when the plurality of chargers 100 is stacked, the lower electrodes 130a and 130b of the charger stacked at an upper end and the upper electrodes 120a and 120b of the charger placed at a lower end are coupled to each other, such that the plurality of chargers 100 may be electrically connected to each other.

When the plurality of chargers 100 is stacked, the protrusion 140 is inserted into the groove 150 of the charger disposed at the upper side.

Likewise, when the plurality of chargers 100 is stacked, the protrusion 140 of the charger disposed at the lower side is inserted into the groove 150.

Therefore, the plurality of chargers 100 according to the present disclosure may be electrically connected to each other and may be stably fixed without being moved, by coupling the upper electrodes 120a and 120b and the lower electrodes 130a and 130b, and by coupling the protrusion 140 and the groove 150.

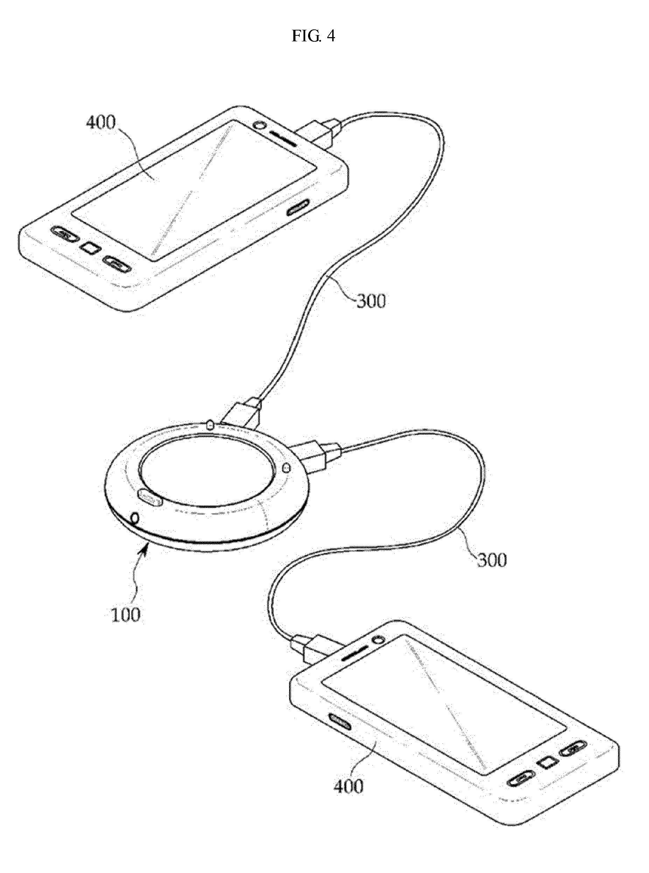

At least one output terminal 160 is an interface for supplying voltage charged in the battery in the main body of the charger 100 to the portable device. Therefore, as illustrated in FIG. 4, the charger 100 according to the present disclosure may be connected with at least one portable device 400 through a connecting line 300 and may charge the battery of the portable device 400. For example, the interface may be a USB port that is compatible with the portable device 400.

The display unit 170 is provided with a red LED and a green LED, and displays a charging state of the charger 100. For example, when the display unit 170 displays green light, it indicates that the portable device charging apparatus 100 is fully charged, and when the display unit 170 displays red light, it indicates that the portable device charging apparatus 100 is not yet charged. When the display unit 170 does not display red light or green light even though electric power is supplied, it indicates that charging may not be normally carried out because the electrodes are abnormally connected, or internal circuits and the like may have a problem.

According to another exemplary embodiment of the present disclosure, a bar code such as a QR code including various types of advertisements or event information, together with a brand name or a logo of a shop, may be attached to an upper part, a lower part, and or a lateral surface of the charger 100. Therefore, the user may receive contents such as events, advertisements, and the like through the bar code while the battery of the user's portable device is charged.

According to yet another exemplary embodiment of the present disclosure, a near field communication chip such as a near field communication (NFC) chip may be embedded in the charger 100. Various types of advertisements, event information, or the like may be included in the near field communication (NFC) chip. In particular, a URL is recorded and stored in the near field communication (NFC) chip. Accordingly, when the user brings the user's portable device into contact with an upper end or the vicinity of the charger 100 while the battery of the user's portable device is charged, the portable device may recognize the corresponding URL. Therefore, the user may access various items of information such as associated homepages, applications, events, moving pictures, and the like. As described above, in a case in which the near field communication (NFC) chip is embedded in the charger 100, there is an advantage in that the advertisements, public relations, associated information, and contents may be easily updated and provided to the user through the near field communication (NFC) chip.

According to a still another exemplary embodiment of the present disclosure, a display unit may be further provided on the upper part and/or the lateral surface of the charger 100. Therefore, the user may receive predetermined information through the display unit of the charger 100 while the battery of the user's portable device is charged.

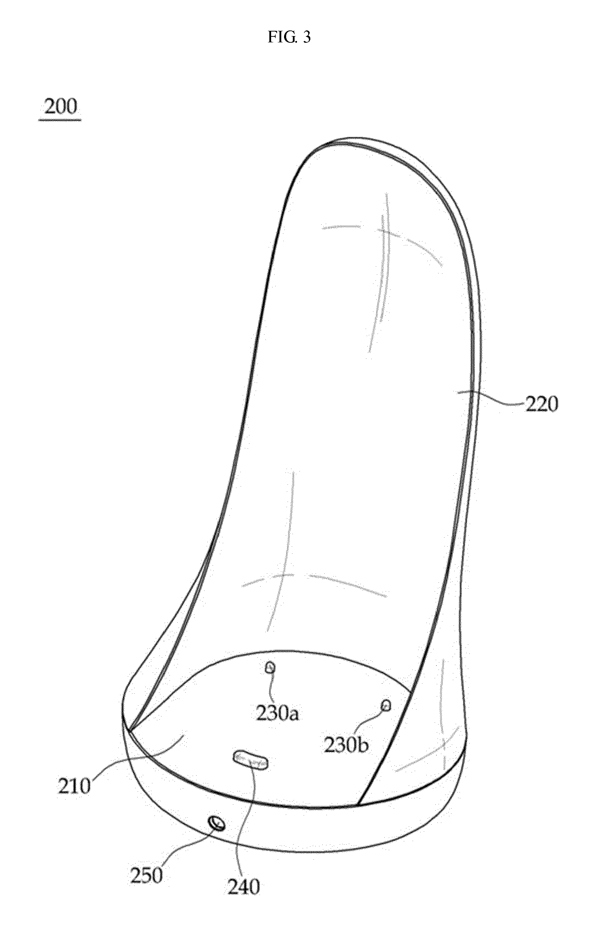

FIG. 3 is a perspective view illustrating a configuration of an adapter according to the exemplary embodiment of the present disclosure.

Referring to FIG. 3, the adapter 200 according to the present disclosure includes the main body 210, the side wall 220, charging electrodes 230a and 230b, a protrusion 240, a power supply terminal 250, and the like.

The main body 210 supports the plurality of chargers 100 that is stacked, and includes therein a circuit unit (not illustrated) that supplies voltage required to charge the plurality of chargers 100.

The side wall 220 is formed to extend vertically from the main body 210 and partially surrounds lateral surfaces of the plurality of portable device charging apparatuses 100 that is stacked, thereby preventing the chargers 100 from being damaged while deviating and being dropped due to external impact.

The charging electrodes 230a and 230b are formed at an upper side of the main body 210, and include a positive electrode 230a and a negative electrode 230b. The charging electrodes 230a and 230b apply voltage output from the circuit unit (not illustrated) of the main body 210 to the plurality of chargers 100. To this end, the charging electrodes 230 may be formed to protrude so as to be inserted into and in contact with the two lower electrodes 130a and 130b of the charger stacked at a lowermost end when the plurality of chargers 100 is stacked on the main body 210.

The protrusion 240 is formed to protrude so as to be inserted into the groove 150 of the charger disposed at the lowermost end when the plurality of chargers 100 is stacked on the main body 210. Therefore, the plurality of chargers 100 may be fixed to the main body 210 of the adapter 200 by coupling the protrusion 240 of the adapter 200 to the groove 150 of the charger disposed at the lowermost end.

The power supply terminal 250 is a terminal that serves to be supplied with electric power from the outside. The power supply terminal 250 may be formed at any position such as a front surface, a bottom surface, a rear surface, both front and rear surface, or the like of the main body 210. In a case in which the power supply terminals 250 are formed at both of the front and rear surfaces of the main body 210, the power supply terminals 250 may be selectively used based on an installation position of the adapter 200.

FIG. 4 is a view for explaining a connection relationship between the charger according to the exemplary embodiment of the present disclosure and a portable device.

As described above, the charger 100 may be separated from the adapter 200 in a state in which the charger 100 is charged through the adapter 200, thereby supplying electric power to the portable device 400. In this case, the charger 100 is used as an auxiliary battery or a charging apparatus for the portable device 400. The charger 100 may be connected to the plurality of portable device 400 through USB ports. With the display unit 170, the user may check an operational state while electric power is supplied to the portable device. For example, when the display unit 170 displays red light, it indicates that the charger 100 is normally performing an operation of supplying electric power. In contrast, when the display unit 170 is turned off or red light flickers, it indicates that charging may not be normally carried out because connecting portions are abnormally fastened, or internal circuits and the like may have a problem. In addition, by displaying a battery state of the charger 100 using green light, blue light, red light, and the like from the display unit 170, it is possible to recognize whether sufficient electric power may be supplied to the portable device 400.

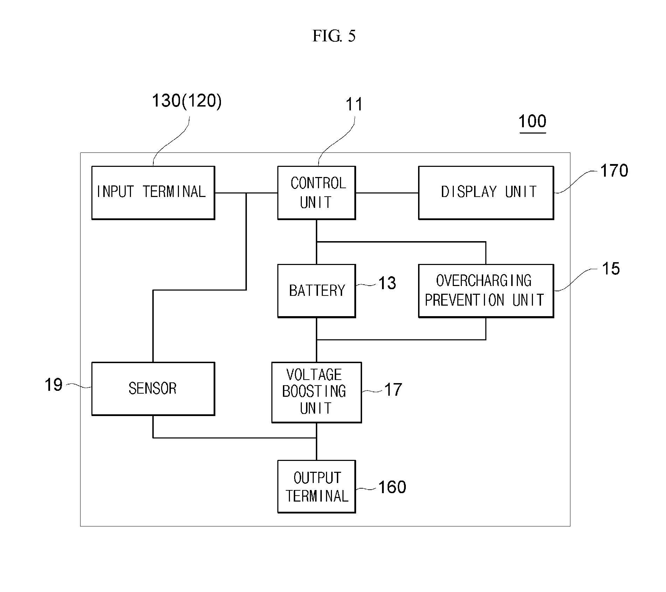

FIG. 5 is a block diagram schematically illustrating a charging circuit of the charger according to the exemplary embodiment of the present disclosure.

A charging circuit of the charger 100 illustrated in FIG. 5 is positioned in the charger main body 110, and serves to control operations of charging and discharging the battery.

Referring to FIG. 5, the charging circuit includes an input terminal 130 or 120, a control unit 11, a battery 13, an overcharging prevention unit 15, a voltage boosting unit 17, a sensor 19, the output terminal 160, and the display unit 170.

Electric power is input to the input terminal 130 from the adapter 200, and the lower electrodes 130a and 130b or the upper electrodes 120a and 120b, which are illustrated in FIG. 2, may be the input terminal 130.

Typically, the control unit 11 may be implemented as a microcomputer. The control unit 11 monitors and controls a charging state and a discharging state of the battery 13, and calculates an amount of electric currents, which may be received from the adapter 200, when the battery 13 is charged. In order to keep a balance between individual battery cells, the control unit 11 may produce individual charging signals corresponding to individual voltage deviations.

In addition, when an external device is separated from the charger 100, the control unit 11 senses the separation and cuts off the output. In addition, when the external device is fully charged, the control unit 11 may also serve to sense the fully charged state of the external device and cut off the output. In addition, when the internal battery is fully charged, the control unit 11 may automatically sense the fully charged state of the internal battery and cut off the input.

Typically, the battery 13 may have a structure in which a plurality of battery packs, each of which includes a plurality of individual battery cells, is connected in series or in parallel. In general, a lithium-based battery is mainly used as the battery 13.

However, since the lithium is an inherently unstable element, the lithium is apt to explode while rapidly reacting with moisture in air, and there is a risk of fire due to overheating of an electrolyte. For this reason, a safety protection circuit (PCM; protect circuit module) may be installed in a lithium-ion battery, and the interior of the battery is surrounded by hard plastic. A "lithium-polymer battery", which generates electricity by using an electrolyte that is provided between a positive electrode and a negative electrode and made of a polymeric material in the form of a solid or a gel instead of a liquid, may be used as the battery.

The overcharging prevention unit 15 serves to prevent the battery from exploding or being damaged due to overcharging. The overcharging prevention unit 15 serves to monitor a state of the battery 13 and shuts down the charging operation.

The voltage boosting unit 17 raises the battery voltage to appropriate voltage required for charging the portable device and outputs the raised voltage. Average voltage of the lithium-based battery is typically 3.7 V, and the voltage boosting unit 17 raises the battery voltage to voltage of 5 V required to charge the portable device, and outputs the raised voltage.

As described above with reference to FIG. 2, a plurality of output terminals 160 may be provided, and the output terminal 160 serves as an interface for supplying voltage charged in the battery 13 to the portable device. Therefore, as illustrated in FIG. 4, the charger 100 according to the present disclosure may be connected with at least one portable device 400 through the connecting line 300 and may charge the battery of the portable device 400. The interface may be a USB port that is compatible with the portable device.

The display unit 170 is provided with a red LED and a green LED, and displays a charging state of the charger 100. For example, when the display unit 170 displays green light, it indicates that the charger 100 is fully charged, and when the display unit 170 displays red light, it indicates that the charger 100 is not yet charged. When the display unit 170 does not display red light or green light even though electric power is supplied through the adapter 200, it indicates that the battery 13 may not be normally charged because the electrodes are abnormally connected, or internal circuits and the like may have a problem.

When the display unit 170 is turned off after the charger 100 is separated from the adapter 200 and connected to the portable device 400, it indicates that the battery of the charger 100 may be discharged, or the portable device may be fully charged.

The display unit 170 may be provided with an LCD, an OLED, or the like. In addition, the display unit 170 simply displays a charging state and a discharging state. The display unit 170 may also display predetermined contents.

The sensor 19 senses a flow of an electric current that is output through the output terminal. When a flow of an electric current is sensed, the sensor 19 determines that the charger 100 supplies electric power to the portable device 400, and allows the display unit 170 to display this state.

As illustrated in FIG. 1, the plurality of chargers 100 is stacked and connected to the adapter 200 in parallel, and supplied with electric power for charging the battery 13 from the adapter 200.

In this case, the chargers 100, which are connected in parallel, are supplied with different amounts of electric power, respectively, in accordance with the states of the batteries of the chargers 100. With the aforementioned "load balancing", the chargers 100 connected to the charging apparatus may finally be fully charged at the same time.

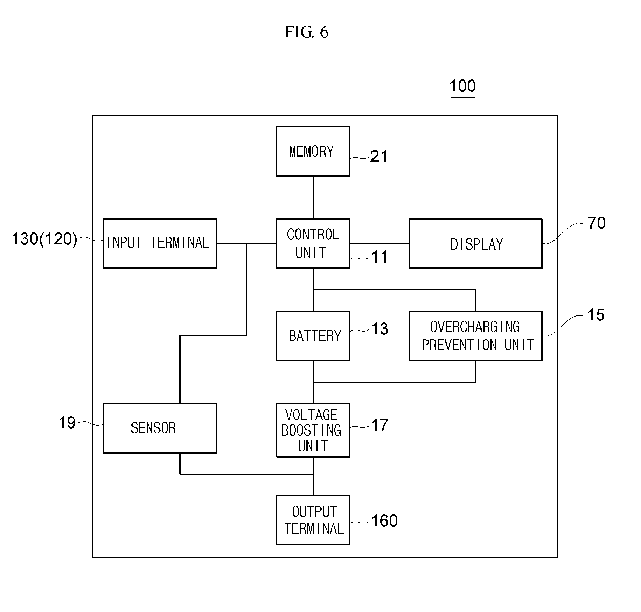

FIG. 6 is a block diagram schematically illustrating a charging circuit of a charger according to another exemplary embodiment of the present disclosure.

The charger 100 illustrated in FIG. 6 may display contents. That is, the charger 100 is characterized in further including a sensor 19, a memory 21, and a display 70 in comparison with the exemplary embodiment that has been described with reference to FIG. 5. Hereinafter, descriptions of constituent elements identical to the constituent elements illustrated in FIG. 5 will be omitted in the present exemplary embodiment, and the sensor 19, the memory 21, and the display 70 will be described.

The sensor 19 senses a flow of an electric current that is output through the output terminal. When a flow of an electric current is sensed, the sensor 19 determines that the charger 100 supplies electric power to the portable device 400. That is, a discharging state of the charger 100 may be sensed by the sensor 19. In particular, the sensor 19 senses whether a mode is converted to a discharging state for supplying electric power of the battery 13 to the portable device 400 connected to the output terminal 160, instead of a charging state in which the battery 13 is supplied with electric power from the adapter 200.

When a flow of an electric current is sensed by the sensor 19, the control unit 11 determines that the charger 100 is connected with the external portable device 400 and supplies electric power of the battery. In this case, the control unit 11 changes the mode to a discharging mode, and displays predetermined contents so that the user may see the predetermined contents through the display 70 of the charger 100 while the user's portable device 400 is charged.

The display 70 is installed on an upper surface of the charger 100. The reason is to allow the user to easily recognize the contents while the charging operation is carried out.

The display 70 may be a small-sized LCD, OLED, or the like that may display letters, icons, logos, images, moving pictures, and the like.

The memory 21 stores contents information that is displayed by the display 70. The contents information may be advertisement contents, logos, address information, campaign information, or the like of a public institution, a business office, or the like which provides a charging service using the chargers 100.

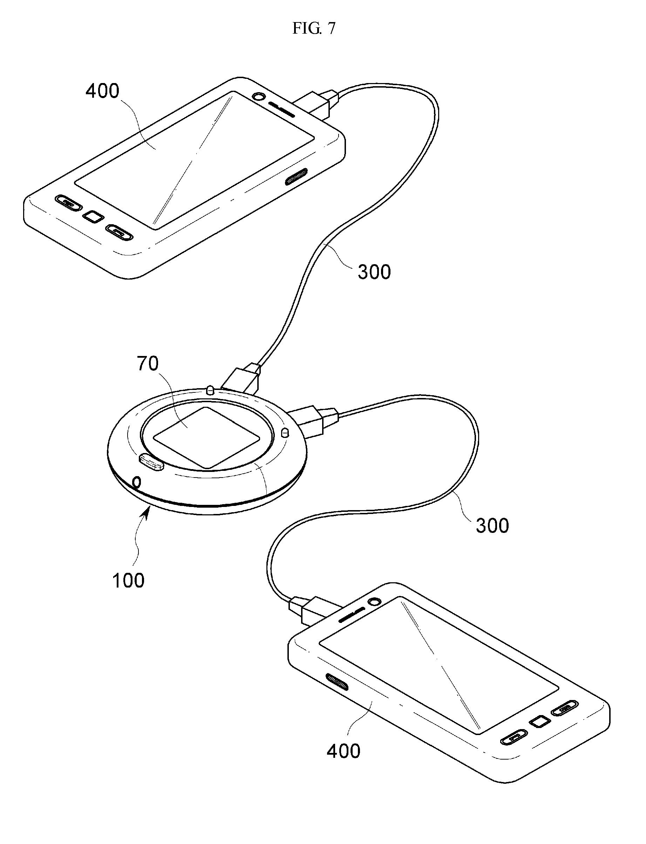

FIG. 7 is a view for explaining an operation of connecting the charger according to another exemplary embodiment of the present disclosure with a portable device.

As described above, the charger 100 may be separated from the adapter 200 in a state in which the charger 100 is charged through the adapter 200, thereby supplying electric power to the portable device 400. In this case, the charger 100 is used as an auxiliary battery or a charging apparatus for the portable device 400. The charger 100 may be connected to the plurality of portable device 400 through USB ports. With the display unit 170, the user may check an operational state while electric power is supplied to the portable device. Meanwhile, when electric power is supplied to the portable device 400 from the charger 100 after the portable device 400 and the charger 100 are connected through the output terminal 160, the sensor 19 senses this state, and the charger 100 is operated in the discharging mode. The control unit 11 changes the mode to the discharging mode, and displays predetermined contents so that the user may see the predetermined contents through the display 70 of the charger while the user's portable device 400 is charged.

As illustrated in the drawing, the display 70 is installed on the upper surface of the charger 100. The reason is to allow the user to easily recognize the contents while the charging operation is carried out. The contents, which are output through the display 70, may be advertisements, logos, addresses, telephone numbers, moving pictures, images, and the like.

The exemplary embodiments disclosed in the present disclosure are not intended to limit the present disclosure. The scope of the present disclosure should be interpreted by the appended claims, all technologies equivalent to the claims also should be interpreted to be included in the scope of the present disclosure.

## Claims

1. A portable device charging apparatus comprising:
at least one charger configured to have a display unit that displays a charging state; and
an adapter configured to mount and accommodate at least two or more chargers that are stacked on the adapter, and supply electric power for charging to the chargers in parallel,
wherein the charger is separated from the adapter and connected to a portable device so as to supply electric power charged through the adapter to the portable device.

2. The portable device charging apparatus of claim 1, wherein the charger comprises:
a main body configured to include a battery cell;
upper electrodes configured to be formed at an upper side of the main body and include a positive electrode and a negative electrode; and
lower electrodes configured to be formed at a lower side of the main body and include a positive electrode and a negative electrode corresponding to the upper electrodes,
wherein the upper electrodes and the lower electrodes are formed at positions that are symmetrical to each other, and the upper electrodes are inserted into the lower electrodes, such that two adjacent chargers are electrically connected to each other.

3. The portable device charging apparatus of claim 2, further comprising:
a protrusion configured to be formed at an upper end of the main body; and
a groove configured to be symmetrical to the protrusion and formed at a lower end of the main body.

4. The portable device charging apparatus of claim 1, wherein the display unit includes a first display mode in which the charger is being charged, a second display mode in which a charging error of the charger is displayed, a third display mode in which the charger is fully charged, and a fourth display mode in which discharging of the charger is displayed.

5. A charger which is electrically connected with an adapter to be supplied with electric power, and connected with a portable device to supply electric power supplied through the adapter to the portable device, the charger comprising:
an input terminal to which electric power is input from the adapter;
a battery configured to be charged with the electric power that is input from the input terminal;
a control unit configured to control a charging state of the battery;
a display unit configured to display the charging state of the battery;
an output terminal through which charging voltage of the battery is supplied to the portable device; and
a connecting unit configured to allow a plurality of chargers to be stacked and connected to each other and allow the plurality of chargers to be electrically connected in parallel.

6. The charger of claim 5, wherein the connecting unit includes:
upper electrodes configured to be formed on an upper surface of the charger and include a positive electrode and a negative electrode; and
lower electrodes configured to be formed on a lower surface of the charger and include a positive electrode and a negative electrode corresponding to the upper electrodes,
wherein the upper electrodes and the lower electrodes are formed at positions that are symmetrical to each other, and the upper electrodes are inserted into the lower electrodes, such that two adjacent chargers are electrically connected to each other.

7. The charger of claim 5, wherein the display unit includes a first display mode in which the charger is being charged, a second display mode in which a charging error of the charger is displayed, a third display mode in which the charger is fully charged, and a fourth display mode in which discharging of the charger is displayed.

8. A portable device charging apparatus comprising:
at least one charger configured to have an output terminal that is connected with a display and a portable device; and
an adapter configured to mount and accommodate at least two or more chargers that are stacked on the adapter, and supply electric power for charging to the chargers in parallel,
wherein the charger is operated in a charging mode in which the charger is connected with the adapter and supplied with electric power, and a discharging mode in which the charger is separated from the adapter and connected with the portable device so as to supply electric power charged through the adapter to the portable device, and in the discharging mode, predetermined contents are displayed through the display.

9. The portable device charging apparatus of claim 8, wherein the charger comprises:
a main body configured to include a battery cell;
upper electrodes configured to be formed at an upper side of the main body and include a positive electrode and a negative electrode; and
lower electrodes configured to be formed at a lower side of the main body and include a positive electrode and a negative electrode corresponding to the upper electrodes,
wherein the upper electrodes and the lower electrodes are formed at positions that are symmetrical to each other, and the upper electrodes are inserted into the lower electrodes, such that two adjacent chargers are electrically connected to each other.

10. The portable device charging apparatus of claim 9, further comprising:
a protrusion configured to be formed at an upper end of the main body; and
a groove configured to be symmetrical to the protrusion and formed at a lower end of the main body.

11. The portable device charging apparatus of claim 8, wherein the charger further comprising:
a memory in which predetermined contents are recorded and stored; and
a sensor configured to sense a flow of an electric current that is output through the output terminal,
wherein when a flow of an electric current is sensed by the sensor, the contents stored in the memory are displayed through the display.

12. A charger which is electrically connected with an adapter to be supplied with electric power, and connected with a portable device to supply electric power supplied from the adapter to the portable device, the charger comprising:
an input terminal to which electric power is input from the adapter;
a battery which is charged with the electric power that is input from the input terminal;
a control unit configured to control a charging state of the battery;
a display unit configured to display the charging state of the battery;
an output terminal through which charging voltage of the battery is supplied to the portable device;
a memory in which predetermined contents are recorded and stored;
a display configured to display the predetermined contents; and
a sensor configured to sense a flow of an electric current that is output through the output terminal,
wherein when a flow of an electric current is sensed by the sensor, the contents stored in the memory are displayed through the display.

13. The charger of claim 12, comprising:
upper electrodes configured to be formed on an upper surface of the charger and include a positive electrode and a negative electrode; and
lower electrodes configured to be formed on a lower surface of the charger and include a positive electrode and a negative electrode corresponding to the upper electrodes,
wherein the upper electrodes and the lower electrodes are formed at positions that are symmetrical to each other, and the upper electrodes are inserted into the lower electrodes, such that two adjacent chargers are electrically connected to each other.

14. The charger of claim 12, wherein the display unit includes a first display mode in which the charger is being charged, a second display mode in which a charging error of the charger is displayed, a third display mode in which the charger is fully charged, and a fourth display mode in which discharging of the charger is displayed.
